# EUROPEAN PATENT APPLICATION

(11) **EP 4 250 400 A1**
(43) Date of publication of application: **27.09.2023**
(21) Application number: 23151535.4
(22) Date of filing: 13.01.2023
(51) Int. Cl.: H01M 4/485, C01G 51/00, H01M 10/0525

(54) **POSITIVE ELECTRODE PIECE, BATTERY AND ELECTRONIC DEVICE**

(30) Priority: 25.03.2022 CN 202210302390
(71) Applicant: Zhuhai CosMX Battery Co., Ltd., Zhuhai, Guangdong 519180 (CN)
(72) Inventor: ZENG, Jiajiang, Guangdong, 519180 (CN); XIA, Dingguo, Guangdong, 519180 (CN); LI, Suli, Guangdong, 519180 (CN); LIU, Jianwen, Guangdong, 519180 (CN)
(74) Representative: Vossius & Partner Patentanwälte Rechtsanwälte mbB

(57) **Abstract**

The present application provides a positive electrode piece, a battery and an electric device. A first aspect of the present invention provides a positive electrode piece, the positive electrode piece includes a positive electrode current collector and a positive electrode active layer provided on at least one surface of the positive electrode current collector, and the positive electrode active layer includes a positive electrode active material; in a plane composed of a length direction and a thickness direction of the positive electrode piece, particles of the positive electrode active material have a longest distance *a* in the length direction of the positive electrode piece, and have a longest distance b in the thickness direction of the positive electrode piece, and in a region not less than 25µm^{∗}25µm, the number of the particles of the positive electrode active material meeting a/b≥3 is N, where N≥2. The positive electrode active material provided by the present invention has a relatively regular morphological structure and is easy to form an accordion stacking structure, which is helpful to improve structural integrity of the positive electrode active material, thereby improving the compaction density of the positive electrode piece and the cycle performance of the battery.

## Description

### TECHNICAL FIELD

The present invention relates to a positive electrode piece, a battery and an electronic device, and relates to the field of electrochemical technology.

### BACKGROUND

With the development of mobile phones, tablets and other consumer electronic products to thin and light, requirement for battery energy density is also increasing. In order to improve the battery energy density, it is an effective method to improve the battery's charging cut-off voltage and compaction density of a positive electrode piece. As a common positive electrode active material, lithium cobaltate has an irregular sphere structure, and improvement of its compaction density is limited. In addition, when charging voltage is ≥ 4.55V (vs.Li), lithium cobaltate will undergo an irreversible phase transition, that is, irreversible phase transition from O3 to H1-3, and the H1-3 phase has poor ionic conductivity and electronic conductivity, which will lead to accelerated capacity attenuation of lithium cobaltate, thus accelerating structure destruction of lithium cobaltate and affecting cycle performance of the battery. How to improve the compaction density of the positive electrode piece and the cycle performance of the battery is an urgent technical problem to be solved by those skilled in the art.

### SUMMARY

The present invention provides a positive electrode piece, to improve compaction density of the positive electrode piece and cycle performance of a battery.

The present invention further provides a battery and an electronic device, including the above positive electrode piece.

A first aspect of the present invention provides a positive electrode piece, the positive electrode piece includes a positive electrode current collector and a positive electrode active layer provided on at least one surface of the positive electrode current collector, and the positive electrode active layer includes a positive electrode active material;
in a plane composed of a length direction and a thickness direction of the positive electrode piece, particles of the positive electrode active material have a longest distance *a* in the length direction of the positive electrode piece, and have a longest distance b in the thickness direction of the positive electrode piece, and in a region not less than 25µm^{∗}25µm, the number of the particles of the positive electrode active material meeting a/b≥3 is N, where N≥2.

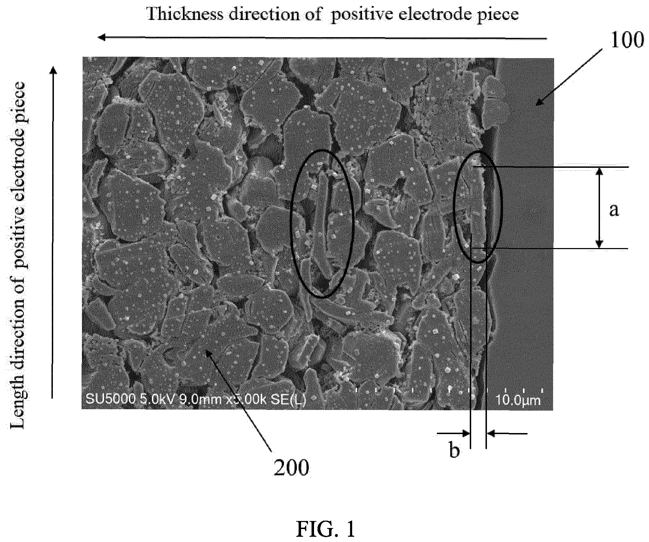

The present invention provides a positive electrode piece, which is treated by CP (cross section polishing) technology and then subjected to SEM imaging test. FIG. 1 is a CP-SEM diagram of the positive electrode piece provided by an example of the present invention. It can be seen from FIG. 1 that the positive electrode piece includes a positive electrode current collector 100 and a positive electrode active layer provided on a surface of the positive electrode current collector 100, and the positive electrode active layer includes several positive electrode active material particles 200. Taking two positive electrode active material particles circled in FIG. 1 as an example, the positive electrode active material is in long strip shape, and in a length direction of the positive electrode piece, a longest distance of the positive electrode active material particles is *a*, and in a thickness direction of the positive electrode piece, a longest distance of the positive electrode active material particles is b, and a sample is taken at any position of a plane with a size not less than 25µm^{∗}25µm, so that the number of the particles of the positive electrode active material meeting a/b≥3 is N, and within the sampling range, the number N of the particles of the positive electrode active material meeting a/b≥3 is greater than or equal to 2. The positive electrode active material provided by the present invention has a relatively regular morphological structure and is easy to form an accordion stacking structure, which is helpful to improve structural integrity of the positive electrode active material, thereby improving the compaction density of the positive electrode piece and the cycle performance of the battery.

In a specific embodiment, the positive electrode active material is lithium cobaltate, with structural formula of Liₙ₋ₓNaₓCo_{1-y}Me_{y}O₂, 0.70≤n≤1, 0<x≤0.15, 0≤y≤0.15, and Me is selected from one or more of Al, Mg, Ti, Zr, Ni, Mn, Y, La, Sr, W, Sc, Ce, P, Nb, V, Ta, and Te. It should be noted that when the positive electrode active material is in different lithium deintercalation states, the n value is different, and before formation and capacity testing for the positive electrode piece, the n value of the positive electrode active material (powder state) is 1, and after formation and capacity testing for the positive electrode piece, when the working voltage of a battery including the positive electrode piece is 3.6-4.0V, the n value is decreased to 0.70-1. This is mainly because some of lithium ions are used to form protective layers, i.e., CEI film and SEI film, on the surfaces of the positive electrode and negative electrode during the first charge and discharge of a battery, which causes irreversible loss of some Li+, and thus after formation and capacity testing Li content of the positive electrode active material in the positive electrode piece is decreased.

It can be seen from XRD tests of the positive electrode active material that the lithium cobaltate provided by the present invention has characteristic peaks different from the conventional lithium cobaltate, specifically, X-ray diffraction pattern of the positive electrode active material has a peak 002 corresponding to a crystal plane 002, a peak 102 corresponding to a crystal plane 102 and a peak 103 corresponding to a crystal plane 103. The lithium cobaltate with the above crystal phase structure has a lower platform voltage than the conventional lithium cobaltate, has multiple platform voltages, and has higher discharge gram capacity and stable structure at the same cut-off voltage, which is helpful to improve the capacity and cycle performance of the battery.

Further, a diffraction angle 2θ of the crystal plane 002 is equal to 18.6°±0.5°, a diffraction angle 2θ corresponding to the peak 102 is equal to 41.7°±0.5°, a diffraction angle 20 corresponding to the peak 103 is equal to 47.1°±0.5°.

The X-ray diffraction pattern of the positive electrode active material further has a peak 101 corresponding to a crystal plane 101 and a peak 004 corresponding to a crystal plane 004, and peak intensity ratio of the peak 101 to the peak 004 is *m,* and when *m* ≥ 1.5, it is helpful to further improve the structural stability of the positive electrode material, so as to be more conducive to the deintercalation and intercalation of lithium ions, otherwise, the structural stability of the positive electrode material will become poor, and there may be incomplete reaction, poor crystallinity and other states leading to poor electrochemical performance.

Particle size of the positive electrode active material is 6-18 µm, and the particle size is a size of a particle of the positive electrode material and can be measured by Malvern laser particle size analyzer.

Based on the special structure of the positive electrode active material provided by the present invention, the positive electrode active material provided by the present invention has conductivity of ≥ 1E⁻⁴S /cm under a force of ≥ 4KN; and compaction density of ≥ 3.75g/ cm³ under a force of ≥ 30KN. A specific test method is: place powder positive electrode active material into a container, compact it under a certain external force, and then conduct conductivity and compaction density tests, where the powder conductivity test adopts the theory of four probes. It is shown that the positive electrode active material provided by the present invention has good conductivity and is helpful to improve the compaction density of the positive electrode piece.

In order to increase the number N of particles of the positive electrode active material in unit area, the compaction density of the positive electrode piece is ≥ 4.0g/ cm³.

After testing, the gram capacity of the positive electrode material is ≥ 196mAh/g(3.0-4.5V, vs.Li), and when charging and discharging at a rate of 0.1C and at a voltage of 3.0-4.5V, the discharge gram capacity obtained is defined as C0 mAh/g, the discharge gram capacity from the beginning of discharge to 4.4V is C1 mAh/g, a gram capacity within a voltage range of 3.8V-3.7V is C2 mAh/g, and C1/C0 is ≥ 9%, C2/C0 is ≥ 25%.

The present invention also provides a preparation method of the positive electrode active material, specifically including: step 1, prepare a compound NaxCoO₂ containing at least Co and Na, where 0.68 < x < 0.74; step 2, disperse the compound NaxCoO₂ containing Co and Na and a compound containing lithium into deionized water for ion exchange reaction, so as to replace some Na ions in NaxCoO₂ with Li ions to obtain the positive electrode material.

In a specific embodiment, the preparation of the positive electrode material specifically includes the following steps:
Step 1-1, weigh a compound containing cobalt and a compound containing sodium in to a required stoichiometric ratio, then fully mix them using one of high-speed mixing device, sand grinding device, ball milling device, plough blade mixing device and inclined mixing device to obtain a mixed material, where during the mixing process, water, alcohol or other solvent media may be added, and then dry the mixed material after mixing evenly.

Where the compound containing cobalt may be one or more of cobalt hydroxide, tricobalt tetraoxide, doped tricobalt tetraoxide, cobalt monoxide, hydroxyl cobalt oxide, cobalt nitrate and cobalt sulfate; the compound containing sodium may be one or more of sodium-containing oxide, sodium carbonate, sodium nitrate, sodium hydroxide, sodium bicarbonate and sodium sulfate;
in addition, a compound containing doped element Me can also be added, and the doped element Me includes one or more of Al, Mg, Ti, Zr, Ni, Mn, Y, La, Sr, W, Sc, Ce, P, Nb, V, Ta, and Te, and specifically may be basic magnesium carbonate, magnesium hydroxide, zirconia, aluminum oxide, yttrium oxide, lanthanum oxide and other compound containing a doped element;
further, the compound containing cobalt, the compound containing sodium and the compound containing Me are mixed for at least 4 hours in a ratio of Na : Co : Me = x : (1-y) : y, 0.68<x<0.74, 0≤y≤0.15, so that the compound can be fully and evenly mixed. Those skilled in the art can observe the mixing state of the compounds through SEM electron microscopy.

Step 1-2, load the mixed material prepared in step 1-1 into a crucible, then put it into a muffle furnace, tunnel furnace, a roller kiln, a tubular furnace and other high-temperature sintering device, and conduct high-temperature sintering in air or oxygen atmosphere to obtain the first compound NaₓCo_{1-y}Me_{y}O₂, 0.68<x<0.74, 0 ≤y ≤0.15.

Further, sintering temperature is 700-900°C and sintering time is 8-50 h.

Step 2, mix the first compound synthesized in step 1-2 with the compound containing lithium in a required ratio and disperse them in deionized water for ion exchange reaction, and through free migration and diffusion of sodium ions and lithium ions in the aqueous solution, replace most of the sodium ions in the first compound with Li ions, and after the reaction, wash and dry the resulting reaction product to obtain the positive electrode material;
the compound containing lithium can be one or more of lithium carbonate, lithium chloride, lithium bromide, lithium iodide, lithium nitrate, lithium hydroxide and lithium fluoride, and if necessary, some compounds containing carbon or fast ion conductor compounds can be added to improve conductivity of the positive electrode material.

A mass ratio of the compound containing lithium to the first compound is ≥ 1, further is 1-3; a mass ratio of the solvent to the first compound is ≥ 5, further is 20-150.

A mass ratio of the compound containing lithium to the first compound is ≥ 1, further is 1-3; a mass ratio of the solvent to the first compound is ≥ 5, further is 20-150.

Reaction device used includes sealed container device with sealing function and mixing capacity, such as wet coating reaction device, coprecipitation reaction device, and the like; during the reaction, stirring speed is 10-200 rpm, reaction temperature is 70-125°C, and reaction time is ≥ 5 h, further, the reaction time is 10-15 h;
a device for drying is such as air blast oven, vacuum drying oven, rotary kiln, disc dryer, and the like, drying temperature is 80-180°C, and drying time is ≥ 10 h.

On the basis of the above prepared positive electrode active material, a positive electrode active layer slurry is prepared in combination with a binder and a conductive agent, and is coated on at least one surface of the positive electrode current collector to obtain a positive electrode active layer, and finally the positive electrode piece is obtained by drying and rolling, where the positive electrode current collector can be an aluminum foil, the binder is selected from one or more of polyvinylidene fluoride (PVDF), polytetrafluoroethylene (PTFE) and lithium polyacrylate (PAALi), the conductive agent is selected from one or more of conductive carbon black, acetylene black, Ketjen black, conductive graphite, conductive carbon fiber, carbon nanotube, single-wall carbon nanotube, multi-wall carbon nanotube, and carbon fiber. A mass ratio of the positive electrode active material, the conductive agent and the binder is (70-99) : (0.5-15) : (0.5-15), further, the mass ratio of the positive electrode material, the conductive agent and the binder is (80-98) : (1-10) : (1-10).

A second aspect of the present invention provides a battery including any one of the above positive electrode pieces.

The present invention provides a battery, specifically, the battery is obtained by assembling the above positive electrode piece, a negative electrode piece, a separator and electrolyte, where the negative electrode piece includes a negative electrode current collector and a negative electrode active layer provided on a surface of the negative electrode current collector. The negative electrode active layer includes a negative electrode active material, a conductive agent and a binder. The negative electrode active material is selected from one or more of artificial graphite, natural graphite, hard carbon, mesocarbon microbead, lithium titanate, silicon carbon, and silicon oxide. Types of the conductive agent and the binder are the same as the type of the positive electrode active layer. A mass ratio of the negative electrode active material, the conductive agent and the binder is (70-99) : (0.5-15) : (0.5-15), further, the mass ratio of the negative electrode material, the conductive agent and the binder is (80-98) : (1-10) : (1-10).

During the preparation of the negative electrode piece, the above negative electrode active material, the conductive agent and the binder are mixed in a certain ratio and dispersed in a solvent to obtain a negative electrode active layer slurry, which is coated on a surface of the negative electrode current collector to obtain the negative electrode piece. The negative electrode current collector may be a copper foil.

The separator is a conventional material in the art, such as a polypropylene-based material, or on this basis, a coating separator coated with ceramics on one or both sides.

The electrolyte is a conventional material in the art, including an organic solvent, a lithium salt and an additive. The organic solvent includes ethylene carbonate (EC), diethyl carbonate (DEC), propylene carbonate (PC), and fluoroethylene carbonate (FEC). The additive has a structure shown in the following formula, and its mass is 0.1-10% of a total mass of the electrolyte:

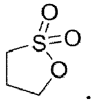

The positive electrode active material provided by the present invention is suitable for high voltage battery, and a working voltage of the battery is 3.0-4.5V. At this voltage condition, because the positive electrode active material has higher gram capacity and structural stability, the battery including the positive electrode active material also has better capacity and cycle performance.

A third aspect of the present application also provides an electronic device, including the battery provided in the second aspect of the present invention. The battery can be used as a power supply or an energy storage unit of the electronic device. The electronic device may be, but is not limited to, mobile devices (such as mobile phones, tablets, laptops, and the like.), electric vehicles (such as pure electric vehicles, hybrid electric vehicles, plug-in hybrid electric vehicles, electric bicycles, electric scooters, electric golf carts, electric trucks, and the like), and the like.

For mobile devices such as mobile phones, tablets, laptops and the like, they are usually required to be thin and light, and may adopt lithium ion batteries as power supplies.

The implementation of the present invention has at least the following advantages:
1. The positive electrode active material provided by the present invention has a relatively regular morphological structure and is easy to form an accordion stacking structure, which is helpful to improve the compaction density of the positive electrode piece and the cycle performance of the battery.
2. The positive electrode active material provided by the present invention has a lower platform voltage than the conventional lithium cobaltate and multiple platform voltages, and has higher discharge gram capacity and stable structure at the same cut-off voltage, which is helpful to improve the capacity and cycle performance of the battery.
3. The battery provided by the present invention has better capacity and cycling performance.

### BRIEF DESCRIPTION OF DRAWINGS

FIG. 1 is a CP-SEM diagram of a positive electrode piece provided by an example of the present invention.

Description of reference numerals:
100 - positive electrode current collector;
200 - positive electrode active material.

### DESCRIPTION OF EMBODIMENTS

In order to make the objectives, technical solutions and advantages of the present invention more clear, the following will describe the technical solutions in the examples of the present invention clearly and completely in combination with the examples of the present invention. Obviously, the described examples are part of the examples of the present invention, not all of them. Based on the examples of the present invention, all other examples obtained by those skilled in the art without creative work belong to the scope of the present invention.

Unless otherwise specified, experimental methods used in the following examples are conventional methods; reagents, materials, and the like used in the following examples can be obtained from commercial sources unless otherwise specified.

### Example 1

A preparation method of a positive electrode material provided in this example includes the following steps:
(1) weigh 3.656 kg of sodium carbonate powder and 29.105 kg of cobalt nitrate hexahydrate powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform;
(2) take 30 g of the mixture and put it into a ceramic crucible, conduct a high-temperature sintering using a well muffle furnace with device model of VBF-1200X with a temperature rise rate for sintering temperature rise curve of 5°C/min, conduct a constant temperature sintering for 10 hours when the temperature rises to 750°C, and naturally cool down to room temperature and take out the sample after sintering to obtain the sintered Na_{0.69}CoO₂, a compound containing cobalt and sodium;
(3) add 200 ml of deionized water, 10.49 g of lithium hydroxide monohydrate and 10.59 g of lithium chloride into a reaction vessel, stir for 5 minutes at a water temperature of 78°C and a rotating speed of 20 rpm, then weigh 10 g of Na_{0.69}CoO₂, the compound containing cobalt element and sodium element obtained in step 2, and keep them for continuous reaction at 78°C and a rotating speed of 20 rpm for 8 hours;
(4) after the reaction, take out the reaction product, conduct suction filtration washing with deionized water for three times, then dry it in an air drying oven at 90°C for 8 hours to obtain the positive electrode material.

### Example 2

A preparation method of a positive electrode material provided in this example may refer to Example 1, the difference lies in that:
(3) add 200 ml of deionized water, 10.49 g of lithium hydroxide monohydrate and 21.71 g of lithium bromide into a reaction vessel, stir for 5 minutes at a water temperature of 78°C and a rotating speed of 20 rpm, then weigh 10 g of Na_{0.69}CoO₂, the compound containing cobalt element and sodium element obtained in step 2, and keep them for continuous reaction at 78°C and a rotating speed of 20 rpm for 8 hours.

### Example 3

A preparation method of a positive electrode material provided in this example may refer to Example 1, the difference lies in that:
(3) add 200 ml of deionized water, 10.49 g of lithium hydroxide monohydrate and 33.46 g of lithium iodide into a reaction vessel, stir for 5 minutes at a water temperature of 78°C and a rotating speed of 20 rpm, then weigh 10 g of Na_{0.69}CoO₂, the compound containing cobalt element and sodium element obtained in step 2, and keep them for continuous reaction at 78°C and a rotating speed of 20 rpm for 8 hours.

### Example 4

A preparation method of a positive electrode material provided in this example may refer to Example 1, the difference lies in that:
(3) add 200 ml of deionized water, 10.49 g of lithium hydroxide monohydrate and 6.48 g of lithium fluoride into a reaction vessel, stir for 5 minutes at a water temperature of 78°C and a rotating speed of 20 rpm, then weigh 10 g of Na_{0.69}CoO₂, the compound containing cobalt element and sodium element obtained in step 2, and keep them for continuous reaction at 78°C and a rotating speed of 20 rpm for 8 hours.

### Example 5

A preparation method of a positive electrode material provided in this example may refer to Example 1, the difference lies in that:
(3) add 200 ml of deionized water, 16.78 g of lithium hydroxide monohydrate and 3.69 g of lithium carbonate into a reaction vessel, stir for 5 minutes at a water temperature of 78°C and a rotating speed of 20 rpm, then weigh 10 g of Na_{0.69}CoO₂, the compound containing cobalt element and sodium element obtained in step 2, and keep them for continuous reaction at 78°C and a rotating speed of 20 rpm for 8 hours.

### Example 6

A preparation method of a positive electrode material provided in this example may refer to Example 1, the difference lies in that:
(3) add 200 ml of deionized water, 16.78 g of lithium hydroxide monohydrate and 16.96 g of lithium chloride into a reaction vessel, stir for 5 minutes at a water temperature of 78°C and a rotating speed of 20 rpm, then weigh 10 g of Na_{0.69}CoO₂, the compound containing cobalt element and sodium element obtained in step 2, and keep them for continuous reaction at 78°C and a rotating speed of 20 rpm for 8 hours.

### Example 7

A preparation method of a positive electrode material provided in this example may refer to Example 1, the difference lies in that:
(3) add 200 ml of deionized water, 16.78 g of lithium hydroxide monohydrate and 4.24 g of lithium chloride into a reaction vessel, stir for 5 minutes at a water temperature of 78°C and a rotating speed of 20 rpm, then weigh 10 g of Na_{0.69}CoO₂, the compound containing cobalt element and sodium element obtained in step 2, and keep them for continuous reaction at 78°C and a rotating speed of 20 rpm for 8 hours.

### Example 8

A preparation method of a positive electrode material provided in this example may refer to Example 1, the difference lies in that:
(3) add 200 ml of deionized water, 10.49 g of lithium hydroxide monohydrate and 10.59 g of lithium chloride into a reaction vessel, stir for 5 minutes at a water temperature of 78°C and a rotating speed of 30 rpm, then weigh 10 g of Na_{0.69}CoO₂, the compound containing cobalt element and sodium element obtained in step 2, and keep them for continuous reaction at 78°C and a rotating speed of 30 rpm for 8 hours.

### Example 9

A preparation method of a positive electrode material provided in this example may refer to Example 1, the difference lies in that:
(1) weigh 2.138 kg of sodium oxide powder and 29.105 kg of cobalt nitrate hexahydrate powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Example 10

A preparation method of a positive electrode material provided in this example may refer to Example 1, the difference lies in that:
(1) weigh 3.656 kg of sodium carbonate powder and 7.493 kg of cobalt monoxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Example 11

A preparation method of a positive electrode material provided in this example may refer to Example 1, the difference lies in that:
(1) weigh 3.656 kg of sodium carbonate powder and 9.293 kg of cobalt hydroxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 12

A preparation method of a positive electrode material provided in this example may refer to Example 1, the difference lies in that:
(1) weigh 3.656 kg of sodium carbonate powder and 8.026 kg of tricobalt tetraoxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 13

A preparation method of a positive electrode material provided in this example may refer to Example 1, the difference lies in that:
(1) weigh 3.656 kg of sodium carbonate powder, 9.200 kg of cobalt hydroxide powder and 50.98 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 14

A preparation method of a positive electrode material provided in this example may refer to Example 1, the difference lies in that:
(1) weigh 3.656 kg of sodium carbonate powder, 9.014 kg of cobalt hydroxide powder and 152.94 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 15

A preparation method of a positive electrode material provided in this example may refer to Example 1, the difference lies in that:
(1) weigh 3.656 kg of sodium carbonate powder, 8.828 kg of cobalt hydroxide powder and 254.9 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 16

A preparation method of a positive electrode material provided in this example may refer to Example 1, the difference lies in that:
(1) weigh 3.656 kg of sodium carbonate powder, 9.200 kg of cobalt hydroxide powder and 40.30 g of nano magnesium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform;

### Example 17

A preparation method of a positive electrode material provided in this example may refer to Example 1, the difference lies in that:
(1) weigh 3.656 kg of sodium carbonate powder, 9.014 kg of cobalt hydroxide powder and 120.91 g of nano magnesium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 18

A preparation method of a positive electrode material provided in this example may refer to Example 1, the difference lies in that:
(1) weigh 3.656 kg of sodium carbonate powder, 8.828 kg of cobalt hydroxide powder and 201.52 g of nano magnesium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 19

A preparation method of a positive electrode material provided in this example may refer to Example 1, the difference lies in that:
(1) weigh 2.138 kg of sodium oxide powder and 9.293 kg of cobalt hydroxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Example 20

A preparation method of a positive electrode material provided in this example may refer to Example 1, the difference lies in that:
(1) weigh 2.138 kg of sodium oxide powder, 9.200 kg of cobalt hydroxide powder and 50.98 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Example 21

A preparation method of a positive electrode material provided in this example may refer to Example 1, the difference lies in that:
(1) weigh 2.138 kg of sodium oxide powder, 9.014 kg of cobalt hydroxide powder and 152.94 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium carbonate in the mixture, it is considered that the mixture is uniform.

### Example 22

A preparation method of a positive electrode material provided in this example may refer to Example 1, the difference lies in that:
(1) weigh 2.138 kg of sodium oxide powder, 8.828 kg of cobalt hydroxide powder and 254.9 g of nano aluminium oxide powder, put them into a high-speed mixing device, mix them at 300 rpm for 3 minutes, mix them at 500 rpm for 5 minutes, mix them at 1000 rpm for 10 minutes, and then take out the mixture, and after confirming that there is no small white spot of white sodium oxide in the mixture, it is considered that the mixture is uniform.

### Comparative Example 1

A positive electrode material provided by this comparative example is conventional undoped lithium cobaltate, and its chemical composition is Li_{1.003}CoO₂, a preparation method thereof includes the following steps:
(1) weigh lithium carbonate and conventional undoped spherical particles of Co₃O₄ purchased in the market in a molar ratio of Li : Co = 100.3 : 100, mix the two substances at 300 rpm for 3 minutes, at 500 rpm for 5 minutes, and at 1000 rpm for 10 minutes using the same mixing device as the examples, and then take out the mixture, and after confirming that there is no small white spot of white lithium carbonate in the mixture, it is considered that the mixture is uniform;
(2) take 30 g of the mixture and put it into a ceramic crucible, conduct a high-temperature sintering using a well muffle furnace with device model of VBF-1200X with a temperature rise rate for sintering temperature rise curve of 5°C/min, conduct a constant temperature sintering for 10 hours when the temperature rises to 1050°C, and naturally cool down to room temperature and take out the sample after sintering to obtain the sintered Li_{1.003}CoO₂, a compound containing cobalt and lithium;
(3) crush and grind the sintered lithium cobaltate, and then put the powder in muffle furnace again for sintering at 950°C for 8 hours; crush the sintered product to obtain Li_{1.003}CoO₂ with D50 being 15.2 µm without any doping and coating.

### Comparative Example 2

A positive electrode material provided by this comparative example is doped and coated lithium cobaltate for high voltage, with its chemical composition being Li_{1.0028}Co_{0.982}Al_{0.014}Mg_{0.002}La_{0.002}O₂;
a preparation method of the positive electrode material includes the following steps:
(1) weigh lithium carbonate, conventional spherical Co₃O₄ particles doped with Al and La and purchased in the market and magnesium oxide particles in to a molar ratio of Li : Co : Mg = 100.28 : 98.2 : 0.2, with stoichiometric ratio of the Co₃O₄ particles is Co : Al: La = 98.2 : 1.4 : 0.2, mix the two substances at 300 rpm for 3 minutes, at 500 rpm for 5 minutes, and at 1000 rpm for 10 minutes using the same mixing device as the examples, and then take out the mixture, and after confirming that there is no small white spot of white lithium carbonate in the mixture, it is considered that the mixture is uniform;
(2) take 30 g of the mixture and put it into a ceramic crucible, conduct a high-temperature sintering using a well muffle furnace with device model of VBF-1200X with a temperature rise rate for sintering temperature rise curve of 5°C/min, conduct a constant temperature sintering for 10 hours when the temperature rises to 1030°C, and naturally cool down to room temperature and take out the sample after sintering to obtain the sintered Li_{1.0028}Co_{0.982}Al_{0.014}Mg_{0.002}La_{0.002}O₂, a compound containing cobalt and lithium;
(3) crush and grind the sintered lithium cobaltate, weigh it and titanium dioxide in a molar ratio of Co : Ti = 98.2 : 0.2, then put the two substances into a high-speed mixing device, set a mixing procedure, mix them at 300 rpm for 3 minutes, mix them at 500 rpm for 5 minutes, mix them at 1000 rpm for 10 minutes, and then take out the mixture; put the powder in the muffle furnace again for sintering at 950°C for 8 hours, and then crush the sintered product to obtain Li_{1.0028}Co_{0.982}Al_{0.014}Mg_{0.002}La_{0.002}Ti_{0.002}O₂, a doped and coated lithium cobaltate material for high voltage, with D50 of 14.8 µm.

### Comparative Example 3

A preparation method of a positive electrode material provided in this comparative example may refer to Example 1, the difference lies in that:
(3) weigh 10.49 g of lithium hydroxide monohydrate, 10.59 g of lithium chloride and 10 g of Na_{0.69}CoO₂, the compound containing cobalt and sodium obtained in step 2, add them into a mixer, mix them evenly and sinter them at high temperature of 300°C for 5 hours.

### Comparative Example 4

A preparation method of a positive electrode material provided in this comparative example may refer to Example 1, the difference lies in that:
(3) weigh 10.49 g of lithium hydroxide monohydrate, 10.59 g of lithium chloride and 10 g of Na_{0.69}CoO₂, the compound containing cobalt and sodium obtained in step 2, add them into a mixer, mix them evenly and sinter them at high temperature of 250°C for 5 hours.

XRD tests, conductivity tests and compaction density tests are carried out on the positive electrode materials provided by Examples 1-22 and Comparative Examples 1-4. The test results of crystal plane diffraction angle, peak intensity ratio, conductivity and compaction density obtained by the XRD tests are shown in Table 1:

**Table 1 Test results of the positive electrode active materials provided by Examples 1-22 and Comparative Examples 1-4**

| | 2θ value of crystal plane 002 (°) | 2θ value of crystal plane 102 (°) | 2θ value of crystal plane 103 (°) | Peak intensity ratio of crystal plane 101 / crystal plane 004 (m) | Powder conductivity under 8KN (S/cm) | Powder compaction density under 30KN (g/cm³) |
|---|---|---|---|---|---|---|
| Example 1 | 18.5937 | 41.7818 | 47.139 | 1.799 | 2.32E⁻⁰² | 3.84 |
| Example 2 | 18.62 | 41.7687 | 47.0864 | 2.018 | 3.72E⁻⁰² | 3.91 |
| Example 3 | 18.6069 | 41.703 | 47.0733 | 3.427 | 5.05E⁻⁰² | 3.89 |
| Example 4 | 18.5675 | 41.6768 | 47.0208 | 3.889 | 6.63E⁻⁰² | 3.92 |
| Example 5 | 18.5675 | 41.6768 | 47.0208 | 4.086 | 2.90E⁻⁰³ | 3.94 |
| Example 6 | 18.5806 | 41.6899 | 47.047 | 2.81 | 5.74E⁻⁰³ | 3.86 |
| Example 7 | 18.5675 | 41.703 | 47.0339 | 4.604 | 9.27E⁻⁰³ | 3.98 |
| Example 8 | 18.5675 | 41.6899 | 47.047 | 1.833 | 1.30E⁻⁰² | 3.96 |
| Example 9 | 18.5675 | 41.6899 | 47.047 | 2.805 | 2.16E⁻⁰² | 3.98 |
| Example 10 | 18.5543 | 41.6768 | 47.0208 | 1.695 | 3.93E⁻⁰² | 3.89 |
| Example 11 | 18.5543 | 41.6636 | 47.0208 | 2.585 | 5.89E⁻⁰² | 3.87 |
| Example 12 | 18.5806 | 41.6899 | 47.0339 | 2.162 | 7.91E⁻⁰² | 3.88 |
| Example 13 | 18.5806 | 41.703 | 47.047 | 2.965 | 1.50E⁻⁰² | 3.90 |
| Example 14 | 18.5806 | 41.6899 | 47.0339 | 3.348 | 2.20E⁻⁰² | 3.85 |
| Example 15 | 18.5675 | 41.703 | 47.0339 | 4.538 | 3.10E⁻⁰² | 3.89 |
| Example 16 | 18.5806 | 41.703 | 47.047 | 2.103 | 3.98E⁻⁰² | 3.91 |
| Example 17 | 18.5675 | 41.703 | 47.0208 | 4.356 | 1.722E⁻⁰² | 3.92 |
| Example 18 | 18.5675 | 41.6899 | 47.0208 | 5.349 | 7.94E⁻⁰³ | 3.94 |
| Example 19 | 18.5675 | 41.6899 | 47.047 | 2.535 | 1.02E⁻⁰² | 3.93 |
| Example 20 | 18.5675 | 41.6768 | 47.0339 | 3.578 | 1.12E⁻⁰² | 3.92 |
| Example 21 | 18.5543 | 41.6899 | 47.0339 | 5.76 | 1.80E⁻⁰² | 3.92 |
| Example 22 | 18.5543 | 41.6899 | 47.0208 | 6.862 | 7.94E⁻⁰³ | 3.90 |
| Comparative Example 1 | No characteristic peak | No characteristic peak | No characteristic peak | / | 4.68E⁻⁰⁷ | 3.74 |
| Comparative Example 2 | No characteristic peak | No characteristic peak | No characteristic peak | / | 5.93E⁻⁰⁷ | 3.75 |
| Comparative Example 3 | 18.5825 | 41.6885 | 47.0338 | 1.459 | 3.38E⁻⁰³ | 3.56 |
| Comparative Example 4 | 18.5782 | 41.6977 | 47.0309 | 1.363 | 3.11E⁻⁰³ | 3.44 |

According to the data in Table 1, compared with Comparative Examples 1-2, the positive electrode active materials provided by the present invention have characteristic peaks corresponding to the crystal plane 002, the crystal plane 102 and the crystal plane 103, and the conductivity is ≥ 1E⁻⁴S/cm under a force of 8KN, and the compaction density is ≥ 3.75g/cm³ under a force of 30KN, which shows that the positive electrode active materials provided by the present invention have better discharge gram capacity, structural stability and conductivity. Meanwhile, the positive electrode active materials provided by the present invention are easy to be compacted, which is helpful to improve the compaction density of a positive electrode piece.

According to the XRD data provided by Examples 1-12 in Table 1, different raw materials and their ratios have a certain influence on phase peak position and the peak intensity of the positive electrode materials; it can be seen according to the XRD data provided by Examples 13-22 that with an increase of doped element content, the peak intensity ratio of crystal plane 101 to crystal plane 004 in the positive electrode materials increases significantly; it can be seen according to the Comparative Examples 3-4 that the peak intensity ratio *m* of the crystal plane 101 and the crystal plane 004 in the positive electrode materials prepared according to the solution method provided by the present invention is significantly increased compared with an ion exchange reaction by the means of sintering.

Button cell capacities of the positive electrode active materials prepared from Examples 1-22 and Comparative Examples 1-4 are tested. A preparation method of a button cell is as follows: mix the positive electrode active material with conductive carbon black (SP) and PVDF in a weight ratio of 8:1:1, disperse them in a solvent to obtain a positive electrode active layer slurry, coat the slurry on an aluminum foil current collector, and roll to prepare a positive electrode piece; then, punch the positive electrode piece with a die to obtain small round pieces with a diameter of 12 mm, conduct drying treatment and weighing treatment, then assemble the button cell by a button cell shell of type 2025, a Li metal round piece as the negative electrode, and conventional high voltage lithium cobaltate electrolyte in a glove box under Ar protective atmosphere. After the button cell is made, it is left to stand for 4 hours in a normal environment, and then a first charge and discharge capacity test is carried out, with the test conditions as below: charging to 4.5V at 0.1C, charging to 0.025C at constant voltage, and cutting off to stand for 3 minutes, then discharging to 3.0V at 0.1C. The first discharge gram capacity C0 mAh/g is recorded, and at the same time, a discharge gram capacity within the range from the beginning of discharge to the cut-off voltage 4.4V is defined as C1 mAh/g, the gram capacity discharged within discharge voltage range of 3.8V-3.7V in the discharge capacity is defined as C2 mAh/g, and C1/C0 and C2/C0 are calculated. The results are shown in Table 2.

The positive electrode active materials provided according to Examples 1-22 and Comparative Examples 1-2 are mixed, after a certain amount of amplification, with conductive carbon black and PVDF in a weight ratio of 96:2:2, dispersed in a solvent to prepare a positive electrode active layer slurry, the slurry is coated on a surface of a positive electrode aluminum current collector, rolled according to the compaction density shown in Table 2 to prepare the positive electrode piece, which is treated with CP and then is subjected to SEM imaging test, and the number N of particles of the positive electrode active material with a/b≥3 is counted at a magnification of 5000 (i.e., sampling region is 25µm^{∗}25µm). The statistical results are shown in Table 2.

The positive electrode piece, a negative electrode piece, a separator and electrolyte are assembled to obtain a lithium ion battery, where a preparation method of the negative electrode piece includes: mixing artificial graphite, styrene butadiene rubber (SBR), sodium carboxymethylcellulose and conductive carbon black in a weight ratio of 94:3:2:1, dispersing the mixture in water and mixing by revolution-rotation mixing equipment, to obtain a negative electrode active layer slurry, and coat the slurry on a negative electrode copper current collector to obtain the negative electrode piece;
the electrolyte includes an organic solvent an additive, and the organic solvent includes ethylene carbonate (EC), diethyl carbonate (DEC), propylene carbonate (PC) and fluoroethylene carbonate (FEC), and the additive has the following structure: 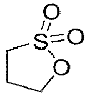 then cycle performance of the lithium ion battery is tested. The cycle performance test process is as follows: at 25°C, charge to 4.50V at a constant current with a charge rate of 1C, then charge to 4.50V at a constant voltage with a charge rate of 0.05C, and then discharge to 3.0V at a discharge rate of 1C. This charge and discharge cycle is repeated for 500 times. A discharge capacity at the first cycle and a discharge capacity at the 500th cycle are determined, to calculate capacity retention rate after the cycles: capacity retention rate after cycles = (discharge capacity at the 500th cycle) / (discharge capacity at the first cycle) * 100%. The results are shown in Table 2.

**Table 2 Performance test results of the positive electrode pieces and the lithium ion batteries assembled according to Examples 1-22 and Comparative Examples 1-4**

| Group | Compaction density of positive electrode piece (g/cm³) | Value N | First discharge gram capacity for button cell C0 (mAh/g) | C1/C0 | C2/C0 | Capacity retention rate after 500 cycles for full battery |
|---|---|---|---|---|---|---|
| Example 1 | 4.23 | 3 | 201.2 | 11.30% | 29.60% | 85.30% |
| Example 2 | 4.29 | 2 | 200.7 | 10.90% | 29.90% | 85.83% |
| Example 3 | 4.18 | 3 | 200.3 | 10.30% | 30.20% | 84.97% |
| Example 4 | 4.25 | 4 | 201.4 | 11.10% | 29.70% | 86.56% |
| Example 5 | 4.3 | 3 | 202.5 | 11.90% | 29.60% | 86.02% |
| Example 6 | 4.28 | 2 | 202 | 12.20% | 30.10% | 84.83% |
| Example 7 | 4.19 | 3 | 199.8 | 12.60% | 31.50% | 86.39% |
| Example 8 | 4.21 | 4 | 201.3 | 11.50% | 28.90% | 83.98% |
| Example 9 | 4.35 | 3 | 201 | 11.30% | 29.80% | 85.76% |
| Example 10 | 4.24 | 4 | 200.8 | 12.10% | 30.05% | 86.13% |
| Example 11 | 4.32 | 3 | 202.3 | 10.85% | 31.06% | 85.93% |
| Example 12 | 4.22 | 2 | 201.4 | 12.30% | 29.45% | 86.77% |
| Example 13 | 4.26 | 4 | 199.5 | 11.70% | 30.64% | 87.81% |
| Example 14 | 4.29 | 5 | 198.4 | 12.34% | 31.47% | 88.34% |
| Example 15 | 4.3 | 5 | 197.4 | 12.98% | 32.05% | 88.76% |
| Example 16 | 4.22 | 4 | 200 | 11.87% | 29.86% | 86.98% |
| Example 17 | 4.26 | 5 | 198.7 | 12.48% | 30.96% | 87.44% |
| Example 18 | 4.2 | 6 | 198 | 13.13% | 31.07% | 88.65% |
| Example 19 | 4.26 | 3 | 201.4 | 11.59% | 29.64% | 84.86% |
| Example 20 | 4.25 | 4 | 199.9 | 11.78% | 29.63% | 86.76% |
| Example 21 | 4.27 | 4 | 199.1 | 12.18% | 30.32% | 87.95% |
| Example 22 | 4.22 | 5 | 198.4 | 13.04% | 31.05% | 88.35% |
| Comparative Example 1 | 4.1 | 0 | 195.4 | 6.54% | 0.46% | 56.32% |
| Comparative Example 2 | 4.12 | 0 | 187.8 | 5.87% | 0.52% | 78.42% |
| Comparative Example 3 | 3.89 | 0 | 189.6 | 9.08% | 24.89% | 79.45% |
| Comparative Example 4 | 3.92 | 0 | 190.4 | 8.17% | 24.68% | 78.87% |

It can be seen from Table 2 that the positive electrode pieces prepared according to the positive electrode active materials provided by the present invention are suitable for higher compaction density, which is benefit from the accordion stacking structure in the positive electrode pieces, the particle number N meeting a/b ≥ 3 in the same region is also significantly increased, which indicates that particle regularity of the positive electrode active material is improved, and with the increase of content of the doped elements, the number of the particles meeting this condition is significantly increased. It can be seen from Examples 13-22 that, with the increase of the content of the doped elements in the positive electrode active material, the number N of the particles is also increased, indicating that the particle regularity increases significantly, which is helpful to improve the cycle performance of lithium ion batteries.

It can be seen from Table 2 that the gram capacity of the positive electrode active material provided by the present invention has significantly increased, specifically, C1/C0≥9%, C2/C0≥25%, which indicates that the positive electrode active material with a particular structure provided by the present invention has more charging and discharging platforms and higher gram capacity play. In addition, based on lower platform voltage and better structural stability of the positive electrode active material, the lithium ion batteries have capacity retention rate of 80% or more after 500 cycles, and have good cycle performance at high voltage.

To sum up, the positive electrode active material provided by the present invention can enable the lithium ion battery to have high discharge gram capacity and excellent cycle performance at high voltage, and can meet people's thinning demand for lithium ion batteries.

Finally, it should be noted that the above examples are only used to illustrate the technical solution of the present invention, not to limit it; although the present invention has been described in detail with reference to the above-mentioned examples, those skilled in the art should understand that they can still modify the technical solutions recited in the above-mentioned examples, or replace equivalently some or all of the technical features therein; however, these modifications or replacements do not make the essence of the corresponding technical solutions depart from the scope of the technical solutions of the examples of the present invention.

## Claims

1. A positive electrode piece, wherein the positive electrode piece comprises a positive electrode current collector and a positive electrode active layer provided on at least one surface of the positive electrode current collector, and the positive electrode active layer comprises a positive electrode active material;
in a plane composed of a length direction and a thickness direction of the positive electrode piece, particles of the positive electrode active material have a longest distance *a* in the length direction of the positive electrode piece, and have a longest distance b in the thickness direction of the positive electrode piece, and in a region not less than 25µm^{∗}25µm, the number of the particles of the positive electrode active material meeting a/b≥3 is N, wherein N≥2.

2. The positive electrode piece according to claim 1, wherein the positive electrode active material is Liₙ₋ₓNaₓCo_{1-y}Me_{y}O₂, 0.70 ≤, n ≤, 1, 0 < x ≤, 0.15, 0 ≤, y ≤, 0.15, and Me is selected from one or more of Al, Mg, Ti, Zr, Ni, Mn, Y, La, Sr, W, Sc, Ce, P, Nb, V, Ta, and Te.

3. The positive electrode piece according to claim 1, wherein X-ray diffraction pattern of the positive electrode active material has a peak 002 corresponding to a crystal plane 002, a peak 102 corresponding to a crystal plane 102, and a peak 103 corresponding to a crystal plane 103.

4. The positive electrode piece according to claim 3, wherein a diffraction angle 20 of the crystal plane 002 is equal to 18.6°±0.5°, a diffraction angle 20 corresponding to the peak 102 is equal to 41.7°±0.5°, and a diffraction angle 2θ corresponding to the peak 103 is equal to 47.1°±0.5°.

5. The positive electrode piece according to claim 1, wherein the X-ray diffraction pattern of the positive electrode active material has a peak 101 corresponding to a crystal plane 101 and a peak 004 corresponding to a crystal plane 004, and a peak intensity ratio of the peak 101 to the peak 004 is *m,* wherein *m* ≥ 1.5.

6. The positive electrode piece according to claim 1, wherein a particle size of the positive electrode active material is 6-18 µm.

7. The positive electrode piece according to claim 1, wherein the positive electrode active material has a conductivity of ≥ 1E⁻⁴S/cm under a force of ≥ 4KN; and/or a compaction density of ≥ 3.75g/cm³ under a force of ≥ 30KN.

8. The positive electrode piece according to claim 1, wherein a compaction density of the positive electrode piece is ≥ 4.0g/cm³.

9. The positive electrode piece according to any one of claims 1-8, wherein the positive electrode active material has an accordion stacking structure.

10. A battery, comprising the positive electrode piece according to any one of claims 1-9.

11. The battery according to claim 10, wherein a working voltage of the battery is 3.0-4.5V.

12. An electronic device, comprising the battery according to claim 10 or 11.
